(19) **Europäisches Patentamt / European Patent Office / Office européen des brevets**

(11) **EP 2 491 617 B1**

(12) # EUROPEAN PATENT SPECIFICATION

(45) Date of publication and mention
of the grant of the patent:
**03.12.2014 Bulletin 2014/49**

(51) Int Cl.:
*H01Q 21/06* (2006.01)     *H01Q 21/20* (2006.01)
*H01Q 21/22* (2006.01)

(21) Application number: **10766298.3**

(22) Date of filing: **21.10.2010**

(86) International application number:
**PCT/EP2010/065889**

(87) International publication number:
**WO 2011/048189 (28.04.2011 Gazette 2011/17)**

(54) **An ultra-wideband radar imaging system using a two-dimensional multiple-input multiple output (MIMO) transducer array**

Ein bildgebendes UWB Radar System mit einem zweidimensionalen MIMO Wandlerarray

Système d'imagerie par radar à bande ultra large utilisant un réseau de transducteurs à entrées et sorties multiples (MIMO)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.10.2009 EP 09173986**

(43) Date of publication of application:
**29.08.2012 Bulletin 2012/35**

(73) Proprietors:
• **The European Union,
represented by the European Commission
1049 Brussels (BE)**
• **Delft University of Technology
2600 AA Delft (NL)**
• **Satimo
91953 Courtaboeuf (FR)**

(72) Inventors:
• **FORTUNY-GUASCH, Joaquim
I-21020 Taino (IT)**
• **MARTINEZ, Alberto
E-08014 Barcelona (ES)**
• **YAROVOY, Alexander
NL-2614 LR Delft (NL)**
• **ZHUGE, Xiaodong
NL-2611 GP Delft (NL)**

• **LERAT, Jean-Marie
F-91160 Longjumeau (FR)**
• **DUCHESNE, Luc
F-91470 Angervilliers (FR)**

(74) Representative: **Office Freylinger
P.O. Box 48
8001 Strassen (LU)**

(56) References cited:
**JP-A- 7 131 239        JP-A- 7 288 417
US-A1- 2008 143 587    US-B1- 6 525 697
US-B2- 6 842 157**

• **KOZICK R J ET AL: "COARRAY SYNTHESIS WITH CIRCULAR AND ELLIPTICAL BOUNDARY ARRAYS", IEEE TRANSACTIONS ON IMAGE PROCESSING, IEEE SERVICE CENTER, PISCATAWAY, NJ, US, vol. 1, no. 3, 1 July 1992 (1992-07-01), pages 391-405, XP000367716, ISSN: 1057-7149**
• **MARTINEZ-VAZQUEZ A ET AL: "UWB MIMO Radar Arrays for small Area Surveillance Applications", ANTENNAS AND PROPAGATION, 2007. EUCAP 2007. THE SECOND EUROPEAN CONFERENCE,, 11 November 2007 (2007-11-11), pages 1-6, XP009130646, cited in the application**

EP 2 491 617 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present invention generally relates to the field of radar imaging, more particularly to a radar transducer array for an imaging radar system.

**Background Art**

Radar transducer arrays with a plurality of transmission and reception antenna elements are well known in radar imaging. Document US 2008/0143587 A1 discloses a multiple-input multiple-output (MIMO) radar system comprising a transmitter array of transmission antenna elements for transmitting RF signals into the direction of a target and a receiver array of reception antenna elements for receiving backscattered RF signals from the target. The individual transmission or reception antenna elements are spaced apart by a distance $\Delta d > R \cdot \lambda_c / \Delta x$, where R is the slant distance at which detection is to be made, $\lambda_c$ is the carrier wavelength and $\Delta x$ is a target dimension. Document US 6,525,697 B1 discloses an aperiodic array antenna using monopole or similar antenna elements that are arranged in the topology of an Archimedes spiral. US 6,842,157 B2 relates to an antenna array including a plurality of sub-arrays. Each sub-array is arranged in the form of a spiral. Document JP 07 131239 A discloses a circular array antenna, wherein the antenna elements are arranged on plural concentric circles.

MIMO radars use multiple separate transmission (TX) and reception (RX) antenna elements that are spatially distributed. The signals transmitted by the different TX antenna elements are backscattered by the target and received independently of one another by the different RX antenna elements. The target is thereby "illuminated" and "viewed" from multiple combinations of directions. As explained in paper "UWB MIMO Radar Arrays for Small Area Surveillance Applications", by A. Martinez-Vazquez and J. Fortuny-Guasch, The Second European Conference on Antennas and Propagation, 11-16 November 2007 (EuCAP 2007), small changes in the viewing angle cause large fluctuations in radar cross section. Appropriately combining the individual received signals leads to better information on the target than traditional beamforming. The paper also discloses a sparse radar transducer array with a single TX antenna element and a plurality of RX antenna elements distributed in an ellipse around the TX antenna element, as well as a sparse radar transducer array with TX and RX antenna elements distributed in alternance in an elliptical configuration. The paper shows that narrow beamwidth and good sidelobe suppression can be achieved with sparse arrays. Nevertheless, the computational effort for computing images using the presented arrays is still significant and leaves room for improvement.

**Technical problem**

It is an object of the present invention to provide radar transducer arrays with which good angular resolution and sidelobe suppression can be achieved while the computational effort associated with image computation is reduced with respect to known transducer geometries. This object is achieved by radar transducer arrays as claimed in claims 1 and 2. Preferred embodiments of the invention are detailed in the dependent claims.

**General Description of the Invention**

A radar transducer array for an ultra-wideband (UWB) imaging radar system operating at a reference wavelength $\lambda_c$ comprises first antenna elements (either transmission antenna elements or reception antenna elements) and second antenna elements (the others of the transmission antenna elements and the reception antenna elements). In the context of the present, a radar system is considered ultra-wideband if its operational bandwidth is at least 50 MHz or amounts to at least 20% of the arithmetic center frequency. According to the invention, the first and second antenna elements are located at specific locations of the array plane. In the following, these array positions are expressed in units of a reference wavelength $\lambda_c$ selected in the operation band of the radar (i.e. the indicated array positions have to be multiplied by $\lambda_c$ in order to express the positions in the same units as the reference wavelength, e.g. meters, centimeters, etc.), with reference to an orthonormal coordinate system centered on the radar transducer array. The tolerance in the positions is at most an eighth of the reference wavelength, i.e. each antenna elements is located within a circle with a radius of at most $0.125 \lambda_c$ centered on the respective nominal position. It should be noted that increasing or decreasing $\lambda_c$ results in uniformly scaling (i.e. a magnification or a reduction, respectively) of the radar transducer array. Preferably, $\lambda_c$ corresponds to the center wavelength of the imaging radar system. However, $\lambda_c$ may also be offset from the center wavelength. The reference wavelength is preferably chosen corresponding to a frequency (via $\lambda_c = c/f$, where c designate the speed of light and f the frequency) in the range from 200 MHz to 12 GHz.

In a first embodiment of the invention, the first antenna elements are located at array positions (2.5000; 2.1812), (2.1812; -2.5000), (-2.5000; -2.1812) and (-2.1812; 2.5000) while the second antenna elements are located at array positions (0,3375; 1.6625), (2.5000; 0,3375), (1.0000; -2,5000), (1.6625; -1.0000), (-0,3375; -1.6625), (-2.5000; -0,3375), (-1.0000; 2,5000) and (-1.6625; 1.0000).

In a second embodiment of the invention, the first antenna elements are located at array positions (2.5000; 0.7500), (0.7500; -2.5000), (-2.5000; -0.7500) and (-0.7500; 2.5000) while the second antenna elements are located at array positions (0,2692; 2.1442), (1.3375; 2.5000), (2.1442; -0.2692), (2.5000; -1.3375), (-0,2692; -2.1442), (-1.3375; -2.5000), (-2.1442; 0.2692) and (-2.5000; 1.3375).

As can readily be recognized, the set of nominal array positions is point-symmetric. In the context of the present, the coordinate system is considered centered on the radar transducer array if the origin of the coordinate system coincides with the point of symmetry of the set of nominal array positions.

When implementing the indicated 4x8 topologies, one will note and appreciate that they allow achieving unprecedented image quality (good sidelobe suppression and little or no aliases) in a system with comparably low complexity. To achieve good sidelobe suppression, the first and second array elements are preferably located at the array positions with a tolerance of at most a sixteenth (6.25%), more preferably even less, of the reference wavelength.

The first antenna elements are preferably transmission antenna elements while the second antenna elements are reception antenna elements. Alternatively, the first antenna elements may be reception antenna elements while the second antenna elements are transmission antenna elements.

An aspect of the present invention concerns an imaging radar system comprising a radar transducer array as defined hereinbefore. Such imaging radar system preferably comprises a signal generation unit operatively connected to the transmission antenna elements and a signal reception unit operatively connected to the reception antenna elements, an image computation unit operatively connected to the signal reception unit and a system control unit operatively connected to the signal generation unit, the signal reception unit and the image computation unit to coordinate operation thereof.

According to a preferred embodiment of the imaging radar system, the signal generation unit comprises an ultra-wideband signal generator and a switching circuit, the switching circuit being configured to alternately switch the signal generator to the transmission antenna elements under control of the system control unit. Similarly, the signal reception unit may comprise an ultra-wideband signal receiver and a switching circuit, the switching circuit of the signal reception unit being configured to alternately switch the signal receiver to the reception antenna elements under a control of the system control unit. The switching circuits are preferably controlled by the system control unit, in such a way that at a given point in time, one of the transmission antenna elements and one of the reception antenna elements are active and that the control unit switches through the different combinations (i.e. pairs of one transmission and one reception antenna) when a radar image is acquired. As an alternative to such time-multiplexed operation, the signal transmission unit could comprise modulators for modulating the signals coupled to the different transmission antenna elements with mutually orthogonal codes or waveforms (CDMA or OFDMA). In this case, the signal reception unit would comprise means for separating the backscattered signals (e.g. code-matched filters) according to the code or waveform they carry.

The image computation unit is preferably configured to compute a radar image from signal contributions obtained for various (more preferably, all possible) pairs of a transmission antenna element and a reception antenna element.

Advantageously, the imaging radar system comprises a display unit, such as e.g. a screen, a computer monitor or the like, operatively connected to the image computation unit.

**Brief Description of the Drawings**

Further details and advantages of the present invention will be apparent from the following detailed description of not limiting embodiments with reference to the attached drawings, wherein:

Fig. 1    is a block schematic diagram of an imaging radar system;

Fig. 2    is a diagram representing the topology of a radar transducer array according to a first embodiment of the invention;

Fig. 3    is a diagram representing the topology of a radar transducer array according to a second embodiment of the invention;

Fig. 4    is a set of graphs representing the near-field array pattern of the topology of Fig. 2 obtained with a point-like target located at 20 $\lambda_c$ range distance;

Fig. 5    is a set of graphs representing the far-field array pattern of the topology of Fig. 2 obtained with a point-like target located at 85 $\lambda_c$ range distance;

Fig. 6 is a set of graphs representing the near-field array pattern of the topology of Fig. 3 obtained with a point-like target located at 20 $\lambda_c$ range distance;

Fig. 7 is a set of graphs representing the far-field array pattern of the topology of Fig. 3 obtained with a point-like target located at 85 $\lambda_c$ range distance;

Fig. 8 is a graph representing a horizontal cut through the far-field array pattern of the transducer array of Fig. 2 for different positioning tolerances of the antenna elements;

Fig. 9 s a graph representing a vertical cut through the far-field array pattern of the transducer array of Fig. 2 for different positioning tolerances of the antenna elements;

Fig. 10 is a diagram representing an equidistant 15x15 radar transducer array as a comparative example;

Fig. 11 is a set of graphs representing the near-field array pattern of the 15x15 transducer array of Fig. 10 with a point-like target (point scatterer) being located at 20 $\lambda_c$ range distance;

Fig. 12 is a set of graphs representing the far-field array pattern of the 15x15 transducer array of Fig. 10 with the point-like target located at 85 $\lambda_c$ range distance;

Fig. 13 is a graph illustrating the influence of scaling the radar transducer array on the horizontal cut of the far-field pattern of an imaging radar system using the topology of Fig. 2;

Fig. 14 is a graph illustrating the influence of scaling the radar transducer array on the vertical cut of the far-field pattern of an imaging radar system using the topology of Fig. 2.

**Description of Preferred Embodiments**

An ultra-wideband (UWB) imaging system with two-dimensional multiple input multiple output (MIMO) transducer array and digital beamforming is configured to achieve both high resolution and low grating/sidelobe level along two principle imaging planes. By utilizing the MIMO array concept, the number of antenna elements is reduced in comparison with conventional array topologies, which minimizes both weight and complexity of the imaging system. The array topology is carefully arranged to achieve optimal performance within two orthogonal planes (combination of the lowest level of sidelobes by a given width of the main lobe, which gives the sharpest image for centrally positioned objects). The transducer array comprises four transmit and eight receive antennas spatially distributed within a two-dimensional plane. Combining with digital beamforming, such device has the potential to achieve real-time imaging (display refresh rate of 10-12 radar images per second) with a single channel transmitter and receiver. The suggested 4 times 8 topology provides unprecedented image quality with regard to imaging radar systems having comparable complexity.

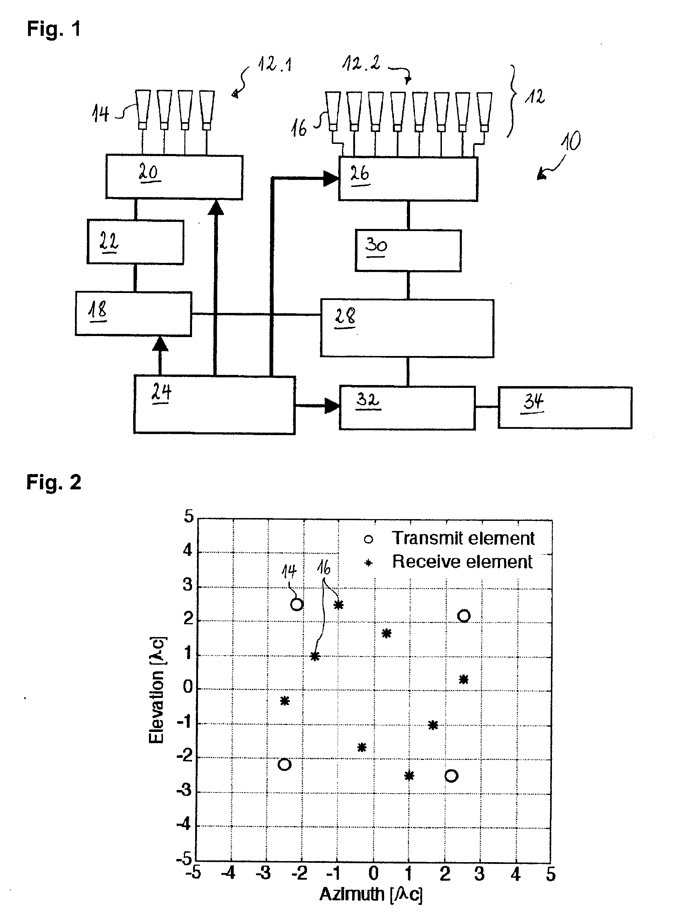

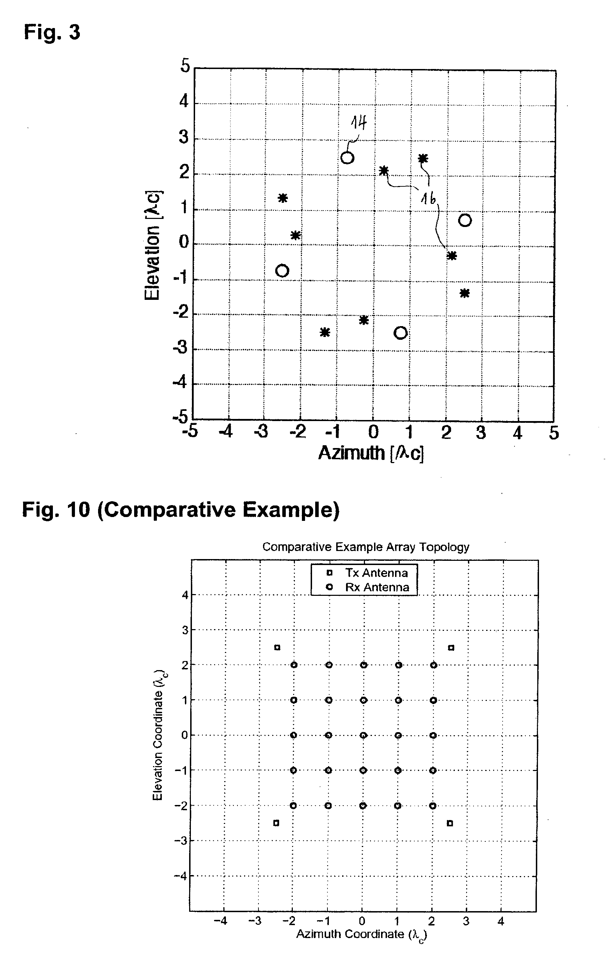

Figure 1 illustrates a preferred embodiment of an UWB imaging radar system 10 in accordance with the invention. The system 10 comprises an array 12 of wideband transducers (subdivided for clarity of the drawing into separate arrays 12.1 and 12.2 of transmission antenna elements 14 and reception antenna elements 16, respectively) and supporting electronics. The transmission and reception antenna elements 14, 16 are provided as microwave transducers that convert electrical signals to electromagnetic waves and convert electromagnetic waves back to radiofrequency electrical signals, respectively. The transducer array topology is that of a highly sparse multiple transmit multiple receive array as illustrated in Figs. 2 and 3. The transmission antenna elements 14 are sequentially excited by a UWB signal generator 18 through a transmit switch circuit 20, which alternately connects the antenna elements 14 to the UWB signal generator 18 via a power amplifier 22. The switching is controlled and synchronized by a system control unit 24. When the backscattered electromagnetic signals arrive at the reception antenna elements 16, the receive switch circuit 26 alternately passes the electric RF signals output by each reception antenna element 16 to a UWB receiver 28 (comprising a demodulator and an A/D converter) through a low-noise amplifier 30. The UWB receiver 28 transposes the incoming radio frequency analog signals to baseband and further converts them into digital signals. The 32 (4x8) digital signals sequentially received for the different transmit/receive pairs of one transmission and one reception antenna element, respectively, are fed into a digital beamforming unit 32 (also referred to as image computation unit), which assigns and weights the signal contributions from the individual pairs to each sampled pixel within the current image, buffers the image, and then accumulates the values for each pixel until all the transmit/receive pairs within the MIMO array have been switched through. The resulting image is fed into a display unit 34, and refreshed in real time.

Two radar transducer array topologies achieving the lowest side/grating lobe level in azimuth and elevation planes without loss of angular resolution are now further described with reference to Figs. 2 and 3. Both topologies comprise four transmission antenna elements 14 and eight reception antenna elements 16 spatially distributed on a two-dimensional plane. No further antenna elements are provided in the transducer array. The antenna element coordinates corresponding to the topology of Fig. 2, normalized to the wavelength at the center frequency, are given in Table 1:

Table 1 : Antenna element coordinates for the transducer array of Fig. 2

| Antenna element | Azimuth coordinate [/$\lambda_c$] | Elevation coordinate [/$\lambda_c$] |
| --- | --- | --- |
| TX I | 2.5000 | 2.1812 |
| TX II | 2.1812 | -2.5000 |
| TX III | -2.5000 | -2.1812 |
| TX IV | -2.1812 | 2.5000 |
| RX I | 0.3375 | 1.6625 |
| RX II | 2.5000 | 0.3375 |
| RX III | 1.0000 | -2.5000 |
| RX IV | 1.6625 | -1.0000 |
| RX V | -2.5000 | -0.3375 |
| RX VI | -0.3375 | -1.6625 |
| RX VII | -1.6625 | 1.0000 |
| RX VIII | -1.0000 | 2.5000 |

The antenna element coordinates corresponding to the topology of Fig. 3, normalized to wavelength at the center frequency, are given in Table 2:

Table 2 : Antenna element coordinates for the transducer array of Fig. 3

| Antenna element | Azimuth coordinate [/$\lambda_c$] | Elevation coordinate [/$\lambda_c$] |
| --- | --- | --- |
| TX I | 2.5000 | 0.7500 |
| TX II | 0.7500 | -2.5000 |
| TX III | -2.5000 | -0.7500 |
| TX IV | -0.7500 | 2.5000 |
| RX I | 0.2692 | 2.1442 |
| RX II | 1.3375 | 2.5000 |
| RX III | 2.1442 | -0.2692 |
| RX IV | 2.5000 | -1.3375 |
| RX V | -0.2692 | -2.1442 |
| RX VI | -1.3375 | -2.5000 |
| RX VII | -2.1442 | 0.2692 |
| RX VIII | -2.5000 | 1.3375 |

The antenna elements 14, 16 are arranged in such a way as to reduce element redundancy and shadowing in the two principle imaging planes (azimuth and elevation planes).

The digital beamforming unit 32 preferably performs digital beamforming using MIMO time-domain back-propagation and/or MIMO Kirchhoff migration algorithms. With a view to the non-uniform distribution of the antenna elements 14, 16, the algorithms are advantageously implemented in time-domain for higher computation efficiency. Nevertheless, the proposed imaging system is not limited to time-domain impulse systems. The use of the these two algorithms with any frequency-domain radar systems, such as frequency modulation continuous wave (FMCW) radar system, or stepped frequency continuous wave (SFCW) radar system would simply require an additional step involving Fast Fourier Transform (FFT) before the image synthesis in the time domain.

In both of the above-mentioned algorithms, image computation is achieved through coherent accumulation of the signal contributions from different transmit/receive pairs. Let $u_{mn}[t]$ be the received digitalized signal from reception antenna element n located at $r_{Rx\_n}$ when transmission antenna element m at position $r_{Tx\_m}$ is transmitting. According to the MIMO back-propagation algorithm, the radar reflectivity at an image point **r** (a vector in Euclidean space, **r**=[x, y, z]) may be calculated as:

$$I_{BP}(\mathbf{r}) = \sum_{m=0}^{N_{Tx}-1} \sum_{n=0}^{N_{Rx}-1} u_{mn}\left(t = \left[(R_{Tx\_m,r} + R_{Rx\_n,r})/c\right]\right) \qquad \text{(Eqn. 1)}$$

where $R_{Tx\_m,r}$ is the distance from transmission antenna element m to the image point **r**, $R_{Tx\_n,r}$ is the distance from reception antenna element n to the image point **r,** c is the speed of light, $N_{Tx}$ is the number of transmission antenna elements 14 numbered from 0 to $N_{Tx}$-1 and $N_{Rx}$ is the number of reception antenna elements 16 numbered from 0 to $N_{Rx}$-1.

The reflectivity at position **r** using the formula of MIMO Kirchhoff migration may be computed as:

$$I_{KIR}(\mathbf{r}) = \sum_{m=0}^{N_{Tx}-1} \sum_{n=0}^{N_{Rx}-1} (w_{Tx\_m,r} + w_{Rx\_n,r}) \cdot u'_{mn}\left(t = \left[(R_{Tx\_m,r} + R_{Rx\_n,r})/c\right]\right) \qquad \text{(Eqn. 2)}$$

where $u'_{mn}[t]$ represents the first derivative of $u_{mn}[t]$, $w_{Tx\_m,r}$ and $w_{Rx\_n,r}$ are weighting functions for the transmission and reception antenna elements, respectively, expressed as:

$$w_{Tx\_m,r} = \left|r_{Tx\_m,r}\right| / R_{Tx\_m,r} \qquad \text{(Eqn. 3)}$$

$$w_{Rx\_n,r} = \left|r_{Rx\_n,r}\right| / R_{Rx\_n,r} \cdot \qquad \text{(Eqn. 4)}$$

$|r_{Tx\_m,r}|$ and $|r_{Rx\_n,r}|$ are the distances between the image point and the transmission and reception antenna element along the normal direction of the aperture plane, respectively. Both weights depend on antenna element position and image point position. As the signals associated with each transmit/receive pair come into the processor sequentially, the image associated with each pair is first synthesized, weighted, and then added to a buffered image. Once the loop through all the transmit/receive pairs is completed, the buffered image is fed to the display unit. The loop is operated at a repetition rate of preferably at least 10 Hz.

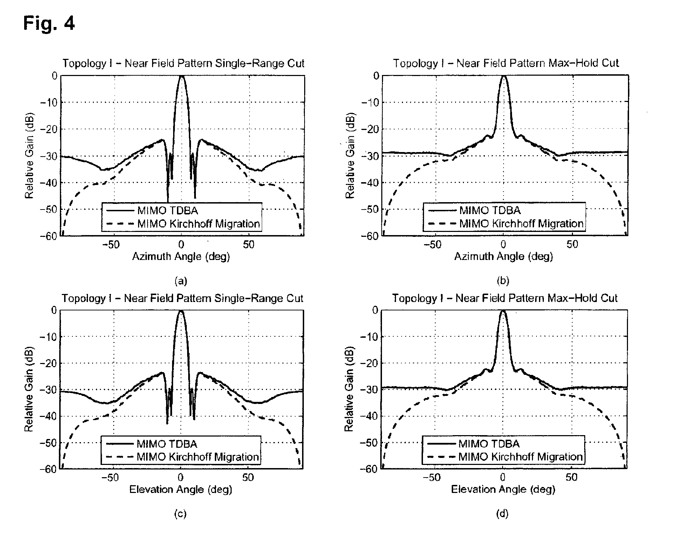

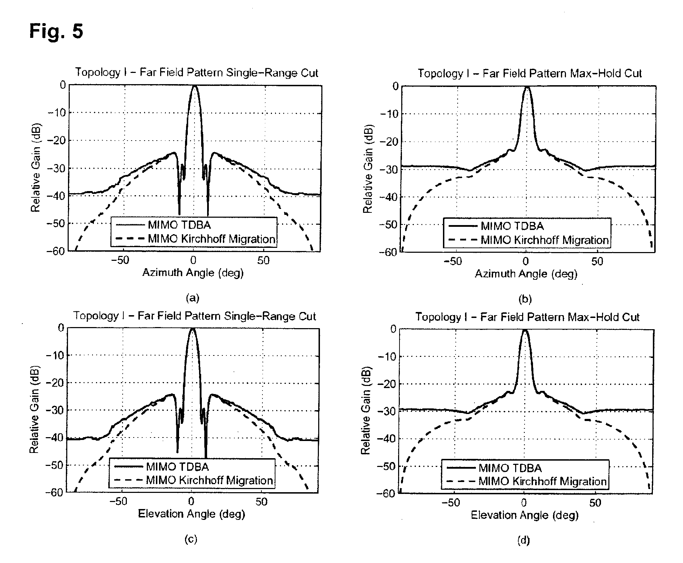

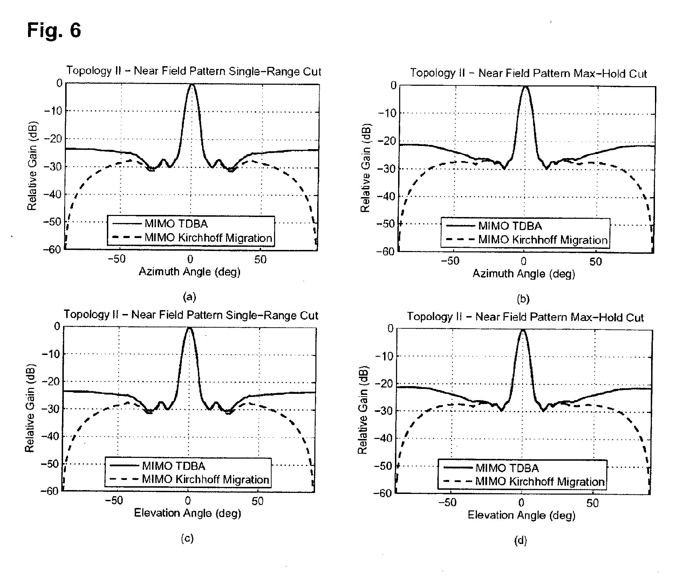

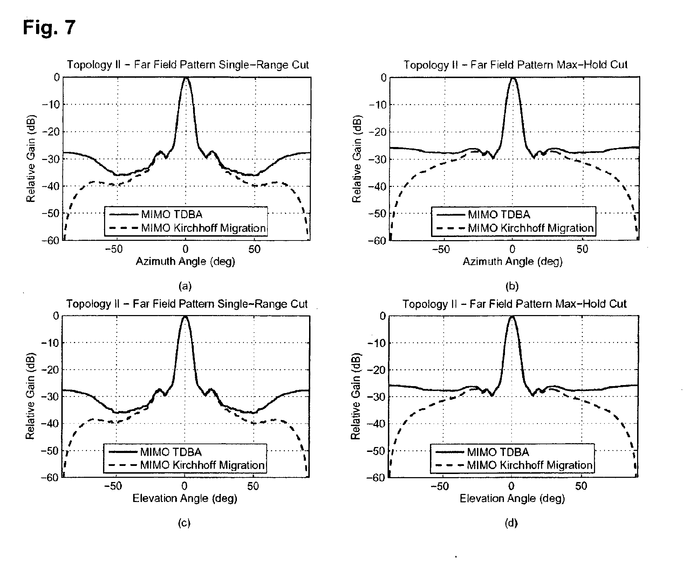

Figs. 4 to 7 show array patterns of the transducer arrays of Figs. 2 and 3 in near-field and far-field obtained using MIMO backpropagation algorithm and MIMO Kirchhoff migration. These patterns are obtained with 120% fractional bandwidth. More specifically, Fig. 4 shows the near-field array pattern of the topology of Fig. 2 obtained with a point-like target located at 20 $\lambda_c$ range distance: (a) is a single range cut within the azimuth plane, (b) is a maximum-hold range cut within the azimuth plane, (c) is a single range cut within the elevation plane and (d) is an maximum-hold range cut within the elevation plane. A "maximum-hold range cut" is obtained by plotting the maximum reflectivity value for all range distances in the image: of all values, only the highest one is selected and shown. Fig. 5 shows the far-field array pattern of the topology of Fig. 2 obtained with a point-like target located at 85 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane. Fig. 6 shows the near-field array pattern of the topology of Fig. 3 obtained with a point-like target located at 20 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane. Fig. 7 shows the far-field array pattern of the topology of Fig. 3 obtained with a point-like target located at 85 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane.

An imaging radar system using the topology of Fig. 2 and MIMO Kirchhoff migration achieves an angular resolution of 4.9 degrees while maintaining an average sidelobe level of -16.5 dB. An imaging radar system using the topology of Fig. 3 and MIMO Kirchhoff migration achieves an angular resolution of 5.5 degrees while maintaining an average sidelobe level of -18.2 dB. Both proposed array topologies present essentially the same performance in azimuth and elevation planes, which may be important for practical applications.

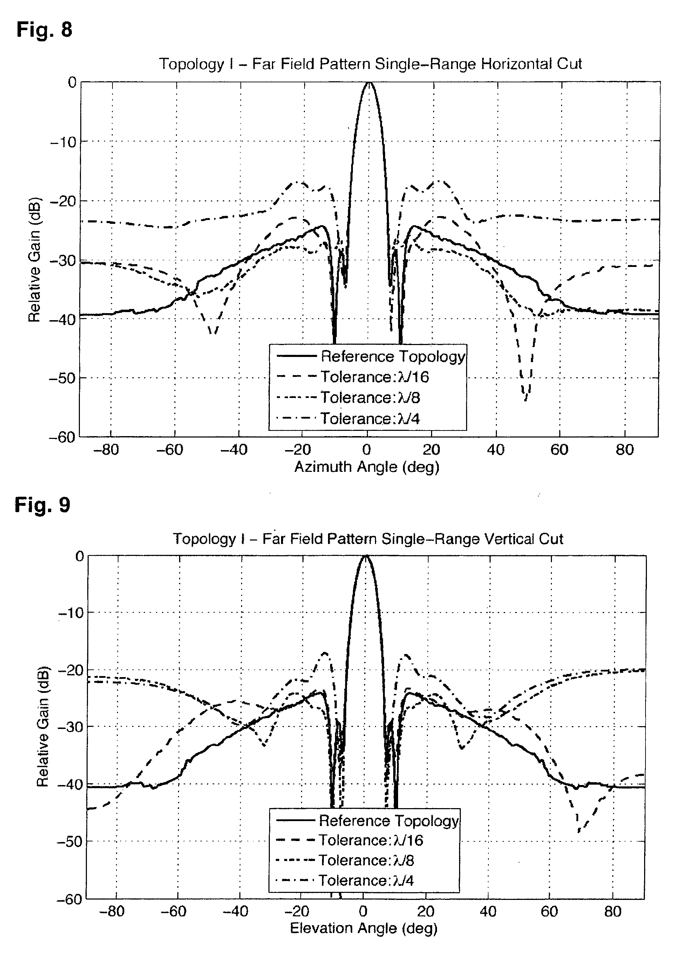

Figs. 8 and 9 illustrate that the performance of a transducer array according to the invention depends on the positioning accuracy of the individual transmission and/or reception antenna elements. Fig. 8 shows a horizontal, Fig. 9 a vertical cut through the far-field array pattern of the transducer array of Fig. 2. The far-field array pattern obtained with the antenna elements positioned at the exact locations of table 1 (reference topology) is shown as a solid line. If the tolerance in the positions of the antenna elements is increased (dashed line: up to $\lambda_c/16$; dotted line: up to $\lambda_c/8$; dash-dotted line: up to $\lambda_c/4$), the amplitude of the sidelobes significantly increases.

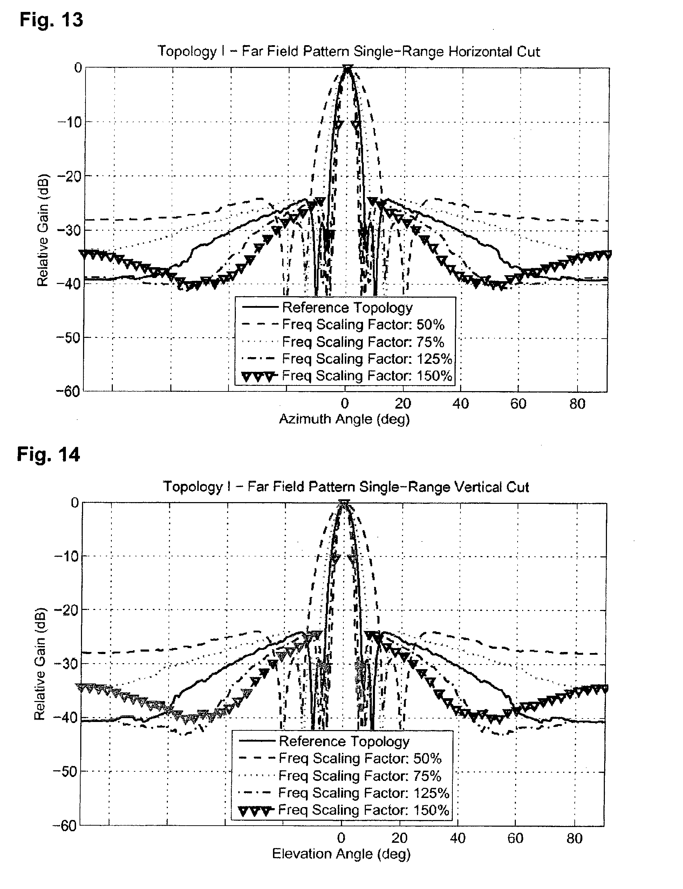

Figs. 13 and 14 illustrate the influence of scaling the radar transducer array on imaging performance. The coordinates in table 1 are expressed in units of wavelength at the center frequency, i.e. in units of the center wavelength of the system. Figs. 13 and 14 show the horizontal and vertical far-field patterns if the center wavelength and the relative bandwidth of the radar system are varied (using the scaling factors indicated in the legend) but the radar transducer array remains unchanged. The figures show that the sidelobe levels do not significantly increase in case of a reference wavelength that is offset from the center wavelength of the radar system.

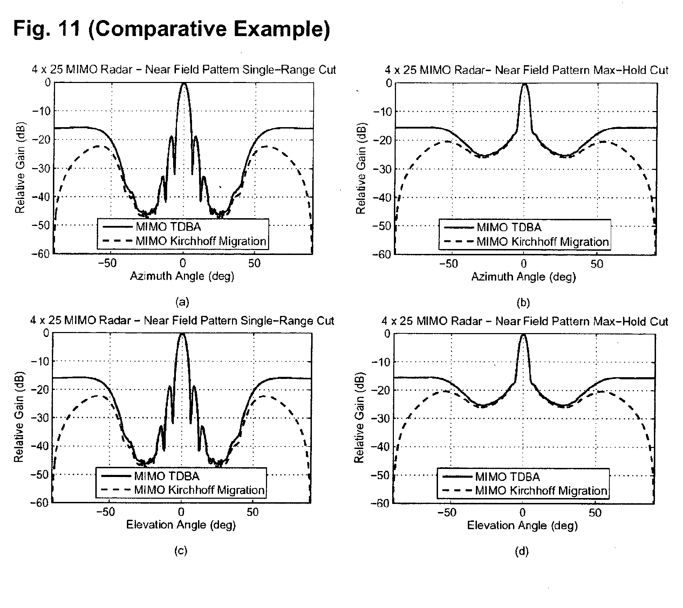

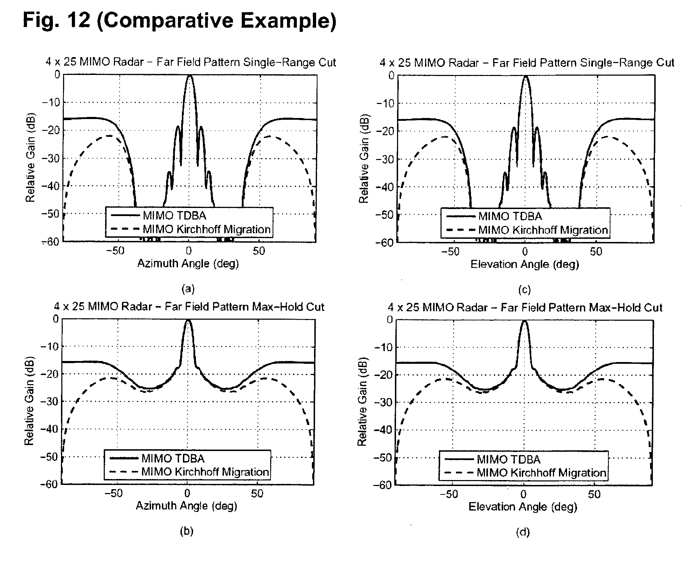

To achieve the same performance using a uniform two-dimensional array with transmission/reception antenna element pairs, the number of antenna elements required would be much greater than in the topologies of Figs. 2 and 3. Fig. 10 shows a radar transducer array with 4 Tx and 25 Rx antennas used for computing the comparative array patterns of Figs. 11 and 12. Fig. 11 shows the near-field array pattern of the transducer array of Fig. 10 with a point-like target being located at 20 $\lambda_c$ range distance: (a) is a single range cut within the azimuth plane, (b) is an maximum-hold range cut within the azimuth plane, (c) is a single range cut within the elevation plane, (d) is an maximum-hold range cut within the elevation plane. Fig. 12 shows the far-field array pattern the transducer array of Fig. 10 with the target located at 85 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane. The comparative example shows that similar angular resolution and sidelobe suppression may be achieved using a conventional array geometry only with a significantly higher number of antenna elements. The present invention thus provides the benefits of less complex and costly hardware as well as significantly reduced computational effort while preserving image quality.

**Reference Number List**

| | |
|---|---|
| 10 | UWB imaging radar system |
| 12 | transducer array |
| 12.1 | transmission antenna array |
| 12.2 | reception antenna array |
| 14 | transmission antenna element |
| 16 | reception antenna elements |
| 18 | UWB signal generator |
| 20 | transmit switch circuit |
| 22 | power amplifier |
| 24 | system control unit |
| 26 | receive switch circuit |
| 28 | UWB receiver |
| 30 | low-noise amplifier |
| 32 | digital beamforming unit |
| 34 | display unit |

**Claims**

1. A radar transducer array (12) for an ultra-wideband imaging radar system (10) configured to operate at a reference wavelength, said radar transducer array (12) comprising first antenna elements and second antenna elements, said first antenna elements being altogether either transmission antenna elements (14) or reception antenna elements (16), said second antenna elements being altogether the others of said transmission antenna elements (14) and said reception antenna elements (16), **characterized in that**
said first antenna elements are located, with a tolerance of at most an eighth of said reference wavelength, at array positions (2.5000; 2.1812), (2.1812; -2.5000), (-2.5000; -2.1812) and (-2.1812; 2.5000), respectively, and said second antenna elements are located, with a tolerance of at most an eighth of said reference wavelength, at array positions (0,3375; 1.6625), (2.5000; 0,3375), (1.0000; -2,5000), (1.6625; -1.0000), (-0,3375; -1.6625), (-2.5000; -0,3375), (-1.0000; 2,5000) and (-1.6625; 1.0000), respectively, said array positions being expressed herein in units of said reference wavelength, with respect to an orthonormal coordinate system centered on said radar transducer array.

2. A radar transducer array (12) for an ultra-wideband imaging radar system (10) configured to operate at a reference wavelength, said radar transducer array (12) comprising first antenna elements and second antenna elements, said first antenna elements being altogether either transmission antenna elements (14) or reception antenna elements (16), said second antenna elements being altogether the others of said transmission antenna elements (14) and said reception antenna elements (16), **characterized in that** said first antenna elements are located, with a tolerance of at most an eighth of said reference wavelength, at array positions (2.5000; 0.7500), (0.7500; -2.5000), (-2.5000; -0.7500) and (-0.7500; 2.5000) and said second antenna elements are located, with a tolerance of at most an eighth of said reference wavelength, at array positions (0,2692; 2.1442), (1.3375; 2.5000), (2.1442; -0.2692), (2.5000; -1.3375), (-0,2692; -2.1442), (-1.3375; -2.5000), (-2.1442; 0.2692) and (-2.5000; 1.3375) said array positions being expressed herein in units of said reference wavelength, with reference to an orthonormal coordinate system centered on said radar transducer array.

3. The radar transducer array (12) as claimed in claim 1 or 2, wherein said first and second array elements are located at said array positions with a tolerance of at most a sixteenth of said reference wavelength.

4. The radar transducer array (12) as claimed in any one of claims 1 to 3, wherein said first antenna elements are transmission antenna elements and said second antenna elements are reception antenna elements.

5. The radar transducer array (12) as claimed in any one of claims 1 to 3, wherein said first antenna elements are reception antenna elements and said second antenna elements are transmission antenna elements.

6. The radar transducer array (12) as claimed in any one of claims 1 to 5, wherein said reference wavelength is selected corresponding to a frequency in the range from 200 MHz to 12 GHz.

7. The radar transducer array (12) as claimed in any one of claims 1 to 6, wherein said coordinate system comprises a horizontal and a vertical axis with respect to which said array positions are expressed.

8. Imaging radar system (10) comprising a radar transducer array (12) as claimed in any one of claims 1 to 7.

9. Imaging radar system (10) as claimed in claim 8, comprising a signal generation unit (18, 20, 22) operatively connected to said transmission antenna elements (14) and a signal reception unit (26, 28, 30) operatively connected to said reception antenna elements (16), an image computation unit (32) operatively connected to said signal reception unit (26, 28, 30) and a system control unit (24) operatively connected to said signal generation unit (18, 20, 22), said signal reception unit (26, 28, 30) and said image computation unit (32) to coordinate operation of said signal generation unit (18, 20, 22), said signal reception unit (26, 28, 30) and said image computation unit (32).

10. The imaging radar system (10) as claimed in claim 9, wherein said signal generation unit comprises an ultra-wideband signal generator (18) and a switching circuit (20), said switching circuit (20) being configured to alternately switch said signal generator (18) to said transmission antenna elements (12) under a control of said system control unit (24).

11. The imaging radar system as claimed in claim 9 or 10, wherein said signal reception unit comprises an ultra-wideband signal receiver (28) and a switching circuit (26), the switching circuit (26) of said signal reception unit being configured to alternately switch said signal receiver (28) to said reception antenna elements (16) under a control of said system control unit (24).

12. The imaging radar system (10) as claimed in any one of claims 9 to 11, wherein said image computation unit (32) is configured to compute a radar image from signal contributions obtained for various pairs of a transmission antenna element (14) and a reception antenna element (16).

13. The imaging radar system (10) as claimed in claim 12, wherein said image computation unit (32) is configured to compute a radar image from signal contributions obtained for all possible pairs of a transmission antenna element

EP 2 491 617 B1

(14) and a reception antenna element (16).

14. The imaging radar system as claimed in any one of claims 9 to 13, comprising a display unit (34), such as e.g. a computer screen, operatively connected to said image computation unit (32).

**Patentansprüche**

1. Radar-Wandlerarray (12) für ein Ultrabreitband-Bilderzeugungs-Radarsystem (10), das konfiguriert ist, um bei einer Referenzwellenlänge zu arbeiten, wobei das Radar-Wandlerarray (12) erste Antennenelemente und zweite Antennenelemente aufweist, wobei die ersten Antennenelemente insgesamt entweder Sendeantennenelemente (14) oder Empfangsantennenelementen (16) sind, wobei die zweiten Antennenelemente insgesamt die anderen Antennenelemente, also die Sendeantennenelemente (14) oder Empfangsantennenelemente (16) sind, **dadurch gekennzeichnet, dass**

die ersten Antennenelementen mit einer Toleranz von höchstens einem Achtel der Referenzwellenlänge bei Arraypositionen (2,5000; 2,1812), (2,1812; -2,5000), (-2,5000; -2,1812) bzw. (-2,1812; 2,5000) angeordnet sind, und die zweiten Antennenelemente mit einer Toleranz von höchstens einem Achtel der Referenzwellenlänge bei Arraypositionen (0,3375; 1,6625), (2,5000; 0,3375), (1,0000; -2,5000), (1,6625; -1,0000), (-0,3375; -1,6625), (-2,5000; -0,3375), (-1,0000; 2,5000) bzw. (-1,6625; 1,0000) angeordnet sind, wobei die Arraypositionen hier in Einheiten der Referenzwellenlänge ausgedrückt werden, in Bezug auf ein zentriert auf dem Radar-Wandlerarray angeordneten orthonormalen Koordinatensystem.

2. Radar-Wandlerarray (12) für ein Ultrabreitband-Radar-Bilderzeugungssystem (10), das konfiguriert ist, um bei einer Referenzwellenlänge zu arbeiten, wobei das Radar-Wandlerarray (12) erste Antennenelemente und zweite Antennenelemente aufweist, wobei die ersten Antennenelemente insgesamt entweder Sendeantennenelemente (14) oder Empfangsantennenelementen (16) sind, wobei die zweiten Antennenelemente insgesamt die anderen Antennenelemente, also die Sendeantennenelemente (14) oder Empfangsantennenelemente (16) sind, **dadurch gekennzeichnet, dass** die ersten Antennenelementen mit einer Toleranz von höchstens einem Achtel der Referenzwellenlänge bei Arraypositionen (2,5000; 0,7500), (0,7500, -2,5000), (-2,5000; -0,7500) und (-0,7500; 2,5000) angeordnet sind, und

die zweiten Antennenelement mit einer Toleranz von höchstens einem Achtel der Referenzwellenlänge bei Arraypositionen (0,2692; 2,1442), (1,3375, 2,5000), (2,1442, -0,2692), (2,5000, -1,3375), (-0,2692; -2,1442), (-1,3375, -2,5000), (-2,1442; 0,2692) und (-2,5000; 1,3375) angeordnet sind,

wobei die Arraypositionen hier in Einheiten der Referenzwellenlänge ausgedrückt werden, mit Bezug auf ein zentriert auf dem Radar-Wandlerarray angeordneten orthonormalen Koordinatensystem.

3. Radar-Wandlerarray (12) nach Anspruch 1 oder 2, wobei sich das erste und das zweite Arrayelement an den Arraypositionen mit einer Toleranz von höchstens einem Sechzehntel der Referenzwellenlänge befinden.

4. Radar-Wandlerarray (12) nach einem der Ansprüche 1 bis 3, wobei die ersten Antennenelemente Sendeantennenelemente und die zweiten Antennenelemente Empfangsantennenelemente sind.

5. Radar-Wandlerarray (12) nach einem der Ansprüche 1 bis 3, wobei die ersten Antennenelemente Empfangsantennenelemente und die zweiten Antennenelemente Sendeantennenelementen sind.

6. Radar-Wandlerarray (12) nach einem der Ansprüche 1 bis 5, wobei die Referenzwellenlänge gemäß einer Frequenz im Bereich von 200 MHz bis 12 GHz ausgewählt wird.

7. Radar-Wandlerarray (12) nach einem der Ansprüche 1 bis 6, wobei das Koordinatensystem eine horizontale und eine vertikale Achse aufweist, in Bezug auf die die Arraypositionen ausgedrückt werden.

8. Bilderzeugungs-Radarsystem (10) mit einem Radar-Wandlerarray (12) nach einem der Ansprüche 1 bis 7.

9. Bilderzeugungs-Radarsystem (10) nach Anspruch 8, umfassend eine Signalerzeugungseinheit (18, 20, 22) in Wirkverbindung mit den Sendeantennenelementen (14) und eine Signalempfangseinheit (26, 28, 30) in Wirkverbindung mit den Empfangsantennenelementen (16), eine Bildberechnungseinheit (32) in Wirkverbindung mit der Signalempfangseinheit (26, 28, 30) und eine Systemsteuereinheit (24) in Wirkverbindung mit der Signalerzeugungseinheit (18, 20, 22), der Signalempfangseinheit (26, 28, 30) und der Bildberechnungseinheit (32) zur Koordinierung des Betriebs der Signalerzeugungseinheit (18, 20, 22), der Signalempfangseinheit (26, 28, 30) und der Bildberechnungseinheit (32).

10. Bilderzeugungs-Radarsystem (10) nach Anspruch 9, wobei die Signalerzeugungseinheit einen Ultrabreitband-Signalgenerator (18) und einen Schaltstromkreis (20) aufweist, wobei der Schaltstromkreis (20) konfiguriert ist, um unter der Steuerung der Systemsteuereinheit (24) den Signalgenerator (18) abwechselnd auf die Sendeantennenelemente (12) zu schalten.

11. Bilderzeugungs-Radarsystem nach Anspruch 9 oder 10, wobei die Signalempfangseinheit einen Ultrabreitband-Signalempfänger (28) und einen Schaltstromkreis (26) aufweist, wobei der Schaltstromkreis (26) der Signalempfangseinheit konfiguriert ist, um unter der Steuerung der Systemsteuereinheit (24) den Signalempfänger (28) abwechselnd auf die Empfangsantennenelemente (16) zu schalten.

12. Bilderzeugungs-Radarsystem (10) nach einem der Ansprüche 9 bis 11, wobei die Bildberechnungseinheit (32) konfiguriert ist, um ein Radarbild aus Signalbeiträgen, die für verschiedene Paare aus einem Sendeantennenelement (14) und einem Empfangsantennenelement (16) erhalten wurden, zu berechnen.

13. Bilderzeugungs-Radarsystem (10) nach Anspruch 12, wobei die Bildberechnungseinheit (32) konfiguriert ist, um ein Radarbild aus Signalbeiträgen, die für alle möglichen Paare von einem Sendeantennenelement (14) und einem Empfangsantennenelement (16) erhalten wurden, zu berechnen.

14. Bilderzeugungs-Radarsystem nach einem der Ansprüche 9 bis 13, umfassend eine Anzeigeneinheit (34), wie beispielsweise einen Computerbildschirm, in Wirkverbindung mit der Bildberechnungseinheit (32).

## Revendications

1. Réseau de transducteurs de radar (12) pour un système d'imagerie radar à bande ultralarge (10) configuré pour fonctionner à une longueur d'onde de référence, ledit réseau de transducteurs de radar (12) comprenant des premiers et seconds éléments d'antenne, lesdits premiers éléments d'antenne étant ensemble soit des éléments d'antenne de transmission (14) soit des éléments d'antenne de réception (16), lesdits seconds éléments d'antenne étant ensemble les autres desdits éléments d'antenne de transmission (14) et desdits éléments d'antenne de réception (16), **caractérisé en ce que**
lesdits premiers éléments d'antenne sont situés, avec une tolérance d'au plus un huitième de ladite longueur d'onde de référence, à des positions de réseau (2,5000; 2,1812), (2,1812; -2,5000), (-2,5000; -2,1812) et (-2,1812 ; 2,5000), respectivement, et
lesdits deuxièmes éléments d'antenne sont situés, avec une tolérance d'au plus un huitième de ladite longueur d'onde de référence, à des positions de réseau (0,3375; 1,6625), (2,5000; 0,3375), (1,0000; -2,5000), (1,6625; -1,0000), (-0,3375; -1,6625), (-2,5000; -0,3375), (-1,0000 ; 2,5000) et (-1,6625 ; 1,0000), respectivement,
lesdites positions de réseau étant exprimées ici en unités de ladite longueur d'onde de référence, par rapport à un système orthonormé de coordonnées centré sur ledit réseau de transducteurs de radar.

2. Réseau de transducteurs de radar (12) pour un système d'imagerie radar à bande ultralarge (10) configuré pour fonctionner à une longueur d'onde de référence, ledit réseau de transducteurs de radar (12) comprenant des premiers et seconds éléments d'antenne, lesdits premiers éléments d'antenne étant ensemble soit des éléments d'antenne de transmission (14) soit des éléments d'antenne de réception (16), lesdits seconds éléments d'antenne étant ensemble les autres desdits éléments d'antenne de transmission (14) et desdits éléments d'antenne de réception (16), **caractérisé en ce que**
lesdits premiers éléments d'antenne sont situés, avec une tolérance d'au plus un huitième de ladite longueur d'onde de référence, à des positions de réseau (2,5000 ; 0,7500), (0,7500 ; -2,5000), (-2,5000 ; -0,7500) et (-0,7500 ; 2,5000), et
lesdits deuxièmes éléments d'antenne sont situés, avec une tolérance d'au plus un huitième de ladite longueur d'onde de référence, à des positions de réseau (0,2692; 2,1442), (1,3375; 2,5000), (2,1442 ; -0,2692), (2,5000; -1,3375), (-0,2692; -2,1442), (-1,3375; -2,5000), (-2,1442 ; 0,2692) et (-2,5000 ; 1,3375),
lesdites positions de réseau étant exprimées ici en unités de ladite longueur d'onde de référence, par rapport à un système orthonormé de coordonnées centré sur ledit réseau de transducteurs de radar.

3. Réseau de transducteurs de radar (12) selon la revendication 1 ou 2, dans lequel lesdits premiers et seconds éléments de réseau sont situés à des positions de réseau ayant une tolérance d'au plus un seizième de ladite longueur d'onde de référence.

4. Réseau de transducteurs de radar (12) selon l'une quelconque des revendications 1 à 3, dans lequel lesdits premiers éléments d'antenne sont des éléments d'antenne de transmission et lesdits seconds éléments d'antenne sont des éléments d'antenne de réception.

5. Réseau de transducteurs de radar (12) selon l'une quelconque des revendications 1 à 3, dans lequel lesdits premiers éléments d'antenne sont des éléments d'antenne de réception et lesdits seconds éléments d'antenne sont des éléments d'antenne de transmission.

6. Réseau de transducteurs de radar (12) selon l'une quelconque des revendications 1 à 5, dans lequel ladite longueur d'onde de référence est sélectionnée correspondant à une fréquence comprise dans la plage allant de 200 MHz à 12 GHz.

7. Réseau de transducteurs de radar (12) selon l'une quelconque des revendications 1 à 6, dans lequel ledit système de coordonnées comprend un axe horizontal et un axe vertical par rapport auxquels lesdites positions de réseau sont exprimées,

8. Système d'imagerie par radar (10) comprenant un réseau de transducteurs de radar (12) selon l'une quelconque des revendications 1 à 7.

9. Système d'imagerie par radar (10) selon la revendication 8, comprenant une unité de génération de signal (18, 20, 22) reliée de manière opérationnelle auxdits éléments d'antenne de transmission (14) et une unité de réception de signal (26, 28, 30) reliée de manière opérationnelle auxdits éléments d'antenne de réception (16), une unité de calcul d'image (32) fonctionnellement reliée à ladite unité de réception de signal (26, 28, 30) et une unité de commande de système (24) reliée de manière opérationnelle à ladite unité de génération de signal (18, 20, 22), ladite unité de réception de signal (26, 28, 30) et ladite unité de calcul d'image (32) pour coordonner le fonctionnement ladite unité de génération de signal (18, 20, 22), de ladite unité de réception de signal (26, 28, 30) et de ladite image unité de calcul d'image (32).

10. Système d'imagerie par radar (10) selon la revendication 9, dans lequel ladite unité de génération de signal comprend un générateur de signal à bande ultralarge (18) et un circuit de commutation (20), ledit circuit de commutation (20) étant configuré pour commuter en alternance ledit générateur de signal (18) sur lesdits éléments d'antenne de transmission (12) sous une commande de ladite unité de commande de système (24).

11. Système d'imagerie par radar tel que revendiqué dans la revendication 9 ou 10, dans lequel ladite unité de réception de signal comprend un récepteur de signal à bande ultralarge (28) et un circuit de commutation (26), le circuit de commutation (26) de ladite unité de réception de signal étant configuré pour commuter en alternance ledit récepteur de signal (28) sur lesdits éléments d'antenne de réception (16) sous une commande de ladite unité de commande de système (24).

12. Système d'imagerie par radar (10) selon l'une quelconque des revendications 9 à 11, dans lequel ladite unité de calcul d'image (32) est configurée pour calculer une image radar à partir des contributions de signal obtenues pour différentes paires d'un élément d'antenne d'émission (14) et d'un élément d'antenne de réception (16).

13. Système d'imagerie par radar (10) selon la revendication 12, dans lequel ladite unité de calcul d'image (32) est configurée pour calculer une image radar à partir des contributions de signal obtenues pour toutes les paires possibles d'un élément d'antenne d'émission (14) et d'un élément d'antenne de réception (16).

14. Système d'imagerie par radar tel que revendiqué dans l'une quelconque des revendications 9 à 13, comprenant une unité d'affichage (34), tel que par exemple un écran d'ordinateur, relié fonctionnellement à ladite unité de calcul d'image (32).

**Fig. 1**

**Fig. 2**

## Fig. 3

## Fig. 10 (Comparative Example)

# Fig. 4

(a)

(b)

(c)

(d)

# Fig. 5

(a)

(b)

(c)

(d)

**Fig. 6**

Topology II – Near Field Pattern Single-Range Cut

(a)

Topology II – Near Field Pattern Max-Hold Cut

(b)

Topology II – Near Field Pattern Single-Range Cut

(c)

Topology II – Near Field Pattern Max-Hold Cut

(d)

Fig. 7

(a)

(b)

(c)

(d)

**Fig. 8**

Topology I – Far Field Pattern Single–Range Horizontal Cut

Legend:
- Reference Topology
- Tolerance: $\lambda/16$
- Tolerance: $\lambda/8$
- Tolerance: $\lambda/4$

Relative Gain (dB) vs Azimuth Angle (deg)

**Fig. 9**

Topology I – Far Field Pattern Single–Range Vertical Cut

Legend:
- Reference Topology
- Tolerance: $\lambda/16$
- Tolerance: $\lambda/8$
- Tolerance: $\lambda/4$

Relative Gain (dB) vs Elevation Angle (deg)

# Fig. 11 (Comparative Example)

4 x 25 MIMO Radar – Near Field Pattern Single-Range Cut

(a)

4 x 25 MIMO Radar– Near Field Pattern Max–Hold Cut

(b)

4 x 25 MIMO Radar – Near Field Pattern Single-Range Cut

(c)

4 x 25 MIMO Radar – Near Field Pattern Max–Hold Cut

(d)

# Fig. 12 (Comparative Example)

4 x 25 MIMO Radar – Far Field Pattern Single-Range Cut

(a)

4 x 25 MIMO Radar – Far Field Pattern Single-Range Cut

(c)

4 x 25 MIMO Radar – Far Field Pattern Max-Hold Cut

(b)

4 x 25 MIMO Radar – Far Field Pattern Max-Hold Cut

(d)

**Fig. 13**

Topology I – Far Field Pattern Single-Range Horizontal Cut

**Fig. 14**

Topology I – Far Field Pattern Single-Range Vertical Cut

**EP 2 491 617 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080143587 A1
- US 6525697 B1
- US 6842157 B2
- JP 7131239 A

### Non-patent literature cited in the description

- **A. MARTINEZ-VAZQUEZ ; J. FORTUNY-GUASCH.** UWB MIMO Radar Arrays for Small Area Surveillance Applications. *The Second European Conference on Antennas and Propagation,* 11 November 2007